# EUROPEAN PATENT SPECIFICATION

(11) **EP 2 127 789 B1**
(45) Date of publication and mention of the grant of the patent: **03.04.2013**
(21) Application number: 08703423.7
(22) Date of filing: 18.01.2008
(51) Int. Cl.: C04B 35/645, B23B 27/14, B01J 3/06, B23B 27/20, C01B 31/06, C04B 35/52, B82Y 30/00

(54) **CUTTING TOOL**
SCHNEIDWERKZEUG
OUTIL DE COUPE

(30) Priority: 19.01.2007 JP 2007010100
(43) Date of publication of application: 02.12.2009
(73) Proprietor: Sumitomo Electric Industries, Ltd., Chuo-ku Osaka-shi Osaka 540-0041 (JP); A.L.M.T. Corp., Minato-ku Tokyo 105-0014 (JP); Sumitomo Electric Hardmetal Corp., Itami-shi, Hyogo 664-0016 (JP)
(72) Inventor: SUMIYA, Hitoshi, Itami-shi Hyogo 664-0016 (JP); OBATA, Kazushi, Minato-ku Tokyo 105-0014 (JP); YOSHINAGA, Miki, Kato-shi Hyogo 679-0221 (JP)
(74) Representative: Prüfer & Partner GbR European Patent Attorneys
(86) International application number: PCT/JP2008/050573
(87) International publication number: WO 2008/088034

(56) References cited:
- EP-A1- 1 921 049
- JP-A- 02 110 570
- JP-A- 2000 190 108
- JP-A- 2004 131 336
- US-A- 5 003 851
- JOURNAL OF MATERIALS SCIENCE KLUWER ACADEMIC PUBLISHERS USA, vol. 39, no. 2, XP257356, 2004, pages 445-450, XP002573562 ISSN: 0022-2461
- TETSUO IRIFUNE ET AL.: 'Nature of Polycrystalline Diamond Synthesized by Direct Conversion of Graphite Using Kawai-Type Multianvil Apparatus' NEW DIAMOND AND FRONTIER CARBON TECHNOLOGY vol. 14, no. 5, 2004, pages 313 - 327, XP003007762

## Description

### TECHNICAL FIELD

The present invention relates to a cutting tool for precision machining, and in particular relates to a cutting tool for precision machining for precisely machining an aluminum alloy, a copper alloy, electroless nickel plating, resin, hard and brittle materials and difficult-to-machine materials such as glass, carbon, MMCs, and the like.

### BACKGROUND ART

Conventionally, natural monocrystalline diamond or synthetic monocrystalline diamond has been used in cutting tools for precision machining of various materials. However, there has been a problem that, when monocrystalline diamond is used in a cutting tool, a blade edge is chipped or a blade edge portion is unevenly worn during use, and thus the cutting tool cannot provide precision machining. In diamond monocrystal, distances between crystal lattice planes differ depending on orientation, and the lattice planes have different in-plane atomic densities. Therefore, diamond monocrystal has a cleavage property, and has hardness and wear resistance that are significantly direction-dependent, causing a defect as described above.

At present, all polycrystalline diamonds marketed for use in tools use an iron group metal such as Co, Ni, Fe, or a ceramic such as SiC, as a sintering aid or a binding agent. They are obtained by sintering diamond powder together with a sintering aid or a binding agent under high-pressure and high-temperature conditions in which diamond is thermodynamically stable (generally, at a pressure of 5 to 6 GPa and at a temperature of 1300 to 1500°C). However, since they contain around 10% by volume of a sintering aid or a binding agent, it is not possible to obtain highly precise blade edge and working surface, and thus such a polycrystalline diamond is not applicable to a precision machining tool. Although naturally produced polycrystalline diamonds (carbonado and ballas) are also known, and some of them are used as a drill bit, they have many defects and they considerably vary in material quality. Therefore, they are not used for the applications described above.

On the other hand, a polycrystalline body of single phase diamond having no binding agent is obtained by directly converting non-diamond carbon such as graphite, glassy carbon, amorphous carbon, or the like into diamond and simultaneously sintering the diamond at an ultra high pressure and an ultra high temperature without a catalyst or a solvent.

As such a polycrystalline body, for example, J. Chem. Phys., 38 (1963) 631-643 [F. P. Bundy] (Non-Patent Document 1), Japan. J. Appl. Phys., 11 (1972) 578-590 [M. Wakatsuki, K. Ichinose, T. Aoki] (Non-Patent Document 2), and Nature 259 (1976) 38 [S. Naka, K. Horii, Y. Takeda, T. Hanawa] (Non-Patent Document 3) disclose obtaining polycrystalline diamond by subjecting graphite as a starting material to direct conversion at an ultra high pressure of 14 to 18 GPa and an ultra high temperature of 3000 K or more.

Further, Japanese Patent Laying-Open No. 2002-066302 (Patent Document 1) describes a method of synthesizing fine diamond by heating carbon nanotube to 10 GPa or more and 1600°C or more.

Furthermore, New Diamond and Frontier Carbon Technology, 14 (2004) 313 [T. Irifune, H. Sumiya] (Non-Patent Document 4) and SEI Technical Review 165 (2004) 68 [Sumiya, Irifune] (Non-Patent Document 5) disclose a method of obtaining dense and highly pure polycrystalline diamond by subjecting highly pure graphite as a starting material to direct conversion and sintering by indirect heating at an ultra high pressure of 12 GPa or more and an ultra high temperature of 2200°C or more.
Patent Document 1: Japanese Patent Laying-Open No. 2002-066302
Non-Patent Document 1: J. Chem. Phys., 38 (1963) 631-643 [F. P. Bundy]
Non-Patent Document 2: Japan. J. Appl. Phys., 11 (1972) 578-590 [M. Wakatsuki, K. Ichinose, T. Aoki]
Non-Patent Document 3: Nature 259 (1976) 38 [S. Naka, K. Horii, Y. Takeda, T. Hanawa]
Non-Patent Document 4: New Diamond and Frontier Carbon Technology, 14 (2004) 313 [T. Irifune, H. Sumiya]
Non-Patent Document 5: SEI Technical Review 165 (2004) 68 [Sumiya, Irifune]

### DISCLOSURE OF THE INVENTION

### PROBLEMS TO BE SOLVED BY THE INVENTION

However, since the polycrystalline diamonds described in Non-Patent Documents 1 to 3 are all made by directly passing an electric current through electrically conductive non-diamond carbon such as graphite and heating the same, it is unavoidable that unconverted graphite remains. Further, the diamonds have grains varying in size and tend to be sintered partly insufficiently. Therefore, it has been possible to obtain only a polycrystalline body with insufficient mechanical properties such as hardness and strength and with a chipped shape, and it has been impossible to obtain a polycrystalline body capable of being used as a cutting tool.

Further, since the method disclosed in Patent Document 1 exerts pressure on carbon nanotube with a diamond anvil, and collects light and heats the carbon nanotube with a carbon dioxide gas laser, it is impossible to manufacture homogeneous polycrystalline diamond of a size applicable to cutting tools.

Furthermore, although the diamonds obtained by the methods disclosed in Non-Patent Documents 4 and 5 may have a very high hardness, they have insufficient reproducibility and unstable mechanical properties. Therefore, there has been a problem that, when they are used as cutting tools, their performances vary depending on samples.

EP 1 921 049 A1 discloses a polycrystalline diamond made substantially only of diamond. As mentioned in that document, the polycrystalline diamond can be used as cutting edge of a cutting tool.

In the Journal of Materials Science Kluwer Academic Publishers USA, Vol. 39, No. 2, XP2573562, there is disclosed a further polycrystalline diamond which has a mixed texture of a homogeneous fine structure and a lamellar structure. Cutting tools are described to be one possible application of that structure.

Furthermore, in US 5 003 851 A, there is described a cutting tool formed by a rake surface and a front flank surface. The rake surface and the front flank surface are shaped to smoothly continue the curved surface of the main cutting edge.

It is the object of the present application to provide a cutting tool with improved properties, especially as to lifetime and cutting resistance.

### MEANS FOR SOLVING THE PROBLEMS

The inventors of the present invention have elaborately studied the relation between a microstructure of polycrystalline diamond obtained by direct conversion and mechanical properties and wear resistance property thereof to examine the causes of the above-mentioned problems. As a result, they have found that the polycrystalline diamond may have a composite construction in which a layered structure and a fine homogeneous structure are mixed, and the one having a composite construction in which these structures are distributed at an appropriate ratio is significantly hard and excellent in wear resistance. The inventors have also found that, in the conventional methods, the ratio between the layered structure and the fine homogeneous structure varies depending on the state of graphite serving as a starting material and minute differences in temperature rising time and pressure condition, and this is a cause of unstable mechanical properties and wear resistance property.

To solve the problems as described above, the inventors employed relatively coarse plate-like graphite or relatively coarse diamond with a non-graphite type carbon material or graphite with low crystallinity or fine-grained graphite added thereto, as a starting material, to the method of directly converting non-diamond carbon into diamond at an ultra high pressure and an ultra high temperature. As a result, they obtained polycrystalline diamond having a construction in which layered or relatively coarse diamond crystals were dispersed in a matrix of fine-grained diamond. The inventors have found that significantly hard and tough polycrystalline diamond can be obtained extremely stably by the effect of preventing plastic deformation and progression of fine cracks provided by the layered or coarse-grained diamond. The inventors have also found that, even in a case where graphite is used, a microstructure can be controlled by temperature rising time and pressure condition, and an appropriate construction as described above can be obtained.

It has been found that a cutting tool having high wear resistance and less uneven wear and cleavage cracks can be obtained by using this material and forming the same into a shape appropriate for a tool or a member, depending on the starting material and synthesis conditions. Therefore, the inventors have found that an extremely excellent cutting tool having durability twice or more that of a conventional material can be obtained by optimizing a starting material and thereby optimizing the microstructure of polycrystalline diamond, and conceived of the present invention.

The present invention has a characteristic that there is provided a cutting tool having a cutting blade formed using polycrystalline diamond made substantially only of diamond and produced by directly converting a non-diamond type carbon material as a starting material into diamond and sintering the diamond at an ultra high pressure and an ultra high temperature without adding a sintering aid or a catalyst, the diamond having a mixed construction including fine-grained diamond with a maximum grain size of less than or equal to 100 nm and an average grain size of less than or equal to 50 nm and plate-like or particulate coarse-grained diamond with a minimum grain size of greater than or equal to 50 nm and a maximum grain size of less than or equal to 10000 nm. Further, the present invention has a characteristic that the polycrystalline diamond has a shape suitable for such a tool.

Preferably, the fine-grained diamond has a maximum grain size of less than or equal to 50 nm and an average grain size of less than or equal to 30 nm, and the coarse-grained diamond has a minimum grain size of greater than or equal to 50 nm and a maximum grain size of less than or equal to 1000 nm.

The polycrystalline diamond used in the cutting tool, provides roundness at a boundary portion between a rake face and a flank forming the cutting blade of the cutting tool. The roundness has a radius of 100 to 2000 nm.

Further, it is effective when the cutting blade is a forming cutting blade. For example, when the cutting blade is a forming cutting blade having an arbitrary shape such as an arc, an ellipse, or a parabola, friction occurs between the cutting blade and a material being machined in various directions. Accordingly, in the case of monocrystalline diamond, the amount of wear significantly differs depending on the direction, and thus it is difficult to evenly wear the diamond, leading to a reduced life. In the case of a cutting tool using polycrystalline diamond of the present invention as a cutting blade, since the cutting tool can perform precision cutting and machining, it can perform precision machining that cannot be provided by conventional polycrystalline diamond, and its life is significantly increased when compared with a cutting tool using conventional polycrystalline diamond or monocrystalline diamond.

### EFFECTS OF THE INVENTION

Since the cutting tool of the present invention uses extremely hard and highly wear resistant polycrystalline diamond of single phase diamond obtained by direct conversion, it has a life twice or more that of a conventional cutting tool.

### BEST MODES FOR CARRYING OUT THE INVENTION

An appropriate amount of a non-graphite type carbon material is added to plate-like graphite or diamond with a grain size of 50 nm or more, to prepare a starting material. The starting material is directly converted into diamond and sintered under a pressure condition in which diamond is thermodynamically stable. As a result, polycrystalline diamond having a construction in which relatively coarse diamonds with an average grain size of, for example, 100 to 200 nm are dispersed in a matrix of significantly fine diamond with an average grain size of, for example, 10 to 20 nm is obtained. Since plastic deformation and progression of cracks are prevented at a relatively coarse diamond portion, the polycrystalline diamond exhibits an extremely tough and high hardness property, and property variations depending on samples are significantly reduced.

Preferably, the amount of the non-graphite type carbon material added to the plate-like graphite or diamond with a grain size of 50 nm or more is greater than or equal to 10% by volume and less than or equal to 95% by volume. If the added amount is less than 10% by volume, layered or coarse-grained diamonds are brought into contact with each other, stress is concentrated at an interface therebetween, and cracks and fractures are likely to occur, causing an unfavorable effect. If the added amount is greater than 95% by volume, the layered or coarse-grained diamond cannot sufficiently exhibit the effect of preventing plastic deformation and progression of fine cracks.

Examples of the non-graphite type carbon material described above include glassy carbon, amorphous carbon, fullerene, carbon nanotube, and the like. Fine carbon with a grain size of 50 nm or less prepared by mechanically pulverizing graphite using a planetary ball mill or the like can also be used.

The mixture described above is introduced into a capsule of a metal such as Mo. When pulverized fine carbon is used, it is necessary to perform the introducing operation within a highly pure inert gas. Next, the mixture introduced into the metal capsule is held for a prescribed period of time at a temperature of 1500°C or more and at a pressure under which diamond is thermodynamically stable, using an ultra high pressure and ultra high temperature generation apparatus capable of performing isotropic pressurization or hydrostatic pressurization such as a multi-anvil type ultra high pressure apparatus or a belt type ultra high pressure apparatus. The non-graphite type carbon is directly converted into diamond and simultaneously sintered. In a case where plate-like graphite with a grain size of 50 nm is used, it is necessary to treat the graphite at a high temperature of 2000°C or more in order to completely convert the graphite into diamond.

Consequently, polycrystalline diamond having a construction in which layered or relatively coarse diamond crystals are dispersed in a matrix of fine-grained diamond can be stably obtained. Further, polycrystalline diamond having a similar construction can be obtained by performing the high pressure and high temperature treatment described above on graphite as a starting material, at a heating rate of 100 to 1000°C/minute. Since the layered or coarse-grained diamond exhibits the effect of preventing plastic deformation and progression of fine cracks, the polycrystalline body has an extremely high hardness of 120 GPa or more, and thus is significantly excellent in wear resistance and has less property variations.

The polycrystalline diamond is used and bonded to a tool body of a cutting tool, roughly shaped by a laser or the like, and a surface of the polycrystalline diamond is polished. The polished surface has a surface roughness Ra of 0.1 µm or less. When such a surface roughness is employed in a cutting tool, the effects of suppressing adhesion or the like of a workpiece, achieving continuous stable cutting, and stabilizing life can be obtained.

Roundness is provided at a boundary portion between a rake face and a flank forming a cutting blade, and the roundness has a radius of 100 to 2000 nm.

By providing roundness to a cutting blade of the polycrystalline diamond of the present invention as described above, an unstably worn area resulting from a difference in crystal orientation of diamond particles arranged linearly in an initial cutting blade is eliminated, and the cutting blade can be used from a stably worn area. Thereby, the cutting blade has less irregularities, and thus the effect of improving a roughness of a machined surface can be obtained.

This cutting tool is suitable for precisely cutting and machining an aluminum alloy, a copper alloy, electroless nickel plating, resin, hard and brittle materials and difficult-to-machine materials such as glass, carbon, MMCs (Metal Matrix Composites), and the like.

### Examples

Graphite powder good in crystallinity with a grain size of 0.05 to 10 10 µm and a purity of 99.95% or more, or synthetic diamond powder with a grain size of 0.05 to 3 µm, with ultra-finely pulverized graphite powder or a variety of non-graphite type carbon materials such as glassy carbon powder, C60 powder, and carbon nanotube powder added thereto, was introduced into an Mo capsule and sealed, and treated under various pressure and temperature conditions for 30 minutes using an ultra high pressure generation apparatus. The generated phase of an obtained sample was identified by X-ray diffraction, and the grain size of a constituent particle was examined by TEM observation. Further, the surface of the obtained sample was mirror polished, and the hardness at the polished surface was measured with a micro Knoop hardness meter.

Table 1 shows experimental results.

**[Table 1]**

| | Starting Material | | | Synthesis Conditions | Product (Polycrystalline Diamond) | | |
|---|---|---|---|---|---|---|---|
| | Base Material | Additive | Added Amount | Pressure, Temperature | Grain Size of Coarse-Grained Portion | Grain Size of Fine Grains | Knoop Hardness |
| Example 1 | 1-3µmGr | 35nmGr | 50vol% | 12GPa, 2300°C | 50-300nm (layered) | 40nm | 120GPa |
| Example 2 | 1.3µmGr | 25nmGr | 70vol% | 12GPa, 2300°C | 50-300nm (layered) | 30nm | 130GPa |
| Example 3 | 1-3µmGr | 10nmGr | 30vol% | 12GPa, 2100°C | 50-200nm (layered) | 15nm | 130GPa |
| Example 4 | 0.1-lmnDia | 10nmGr | 50vol% | 9GPa, 1900°C | 100-1000nm | 15nm | 120GPa |
| Example 5 | 1-3µmGr | Glassy Carbon | 50vol% | 9GPa, 1900°C | 50-200nm (layered) | 10nm | 120GPa |
| Example 6 | 1-3µmGr | C60 | 50vol% | 9GPa, 1900°C | 50-200nm (layered) | 10nm | 120GPa |
| Example 7 | 1-3µmGr | Carbon Nanotube | 50vol% | 9GPa, 1900°C | 50-200nm (layered) | 10nm | 120GPa |
| Example 8 | 0.1-1 µm Dia | Glassy Carbon | 50vol% | 9GPa, 1900°C | 100-1000nm | 10nm | 120GPa |
| Example 9 | 0.1-1µm Dia | C60 | 50vol% | 9GPa, 1900°C | 100-1000nm | 10nm | 120GPa |
| Example 10 | 0.1-1µm Dia | Carbon Nanotube | 50vol% | 9GPa, 1900°C | 100-1000nm | 10nm | 120GPa |
| Comparative Example 1 | 1-3µmGr | None | - | 12GPa, 2300°C | 50-100mn (layered) | 25nm | 100-130GPa |
| Comparative Example 2 | 0.1-1µm Dia | None | - | 12GPa, 2300°C | 100-1000nm | None | 70-90GPa |
| Comparative Example 3 | Glassy Carbon | None | - | 9GPa, 1900°C | None | 10nm | 95GPa |
| Comparative Example 4 | C60 | None | - | 9GPa, 1900°C | None | 10nm | 80GPa |

The above results show that, when graphite or diamond with an average grain size of 50 nm or more, with finely pulverized graphite or a non-graphite type carbon material added thereto in a range of greater than or equal to 10% by volume and less than or equal to 95% by volume, is prepared as a starting material, and subjected to direct conversion and sintering at an ultra high pressure and an ultra high temperature, polycrystalline diamond having a construction in which layered diamond or relatively coarse diamond crystals with a grain size of 50 nm or more are dispersed in a matrix of fine-grained diamond with an average grain size of 50 nm or less is stably obtained. It is found that the obtained polycrystalline body has a hardness extremely higher than that of a sintered body of a conventional Co binder (60 to 80 GPa), and has no variations in hardness properties as seen in a polycrystalline body using graphite as a starting material. Based on these results, it is considered that when the polycrystalline diamonds of Examples 1 to 10 are applied to a cutting tool or a wear resistant member, life is significantly improved.

Accordingly, cutting tools were fabricated using the polycrystalline diamond obtained in Example 1 (the present tools A to E, F, G), and a cutting test was performed. For comparison, a cutting tool using conventional monocrystalline diamond (comparative tool A) and a tool using sintered diamond containing a conventional Co binder (comparative tool B) were also fabricated. Tool shapes, a workpiece, and cutting conditions were as follows:

### (Test Example 1)

### (1) Tools

### (Common specifications)

corner radius 0.8 mm, relief angle 7°, rake angle 0°

### (Specifications for individual tools)

the present tool A: cutting blade roundness a radius of 100 nm
the present tool B: cutting blade roundness a radius of 1000 nm
the present tool C: cutting blade roundness a radius of 2000 nm
the present tool D: cutting blade roundness a radius of 50 nm
the present tool E: cutting blade roundness a radius of 3000 nm

### (2) Workpiece

aluminum alloy AC4B φ150×190 mm

### (3) Machining Method

cylinder periphery turning wet cutting (2% aqueous emulsion)

### (4) Cutting Conditions

number of revolutions of a main spindle: 1,700 rpm (constant number of revolutions)
feed speed: 0.1 mm/rev
depth: φ0.2 mm/diameter
cutting distance: 30 km

As a result of performing a cutting test under the conditions described above, the following were found:
1) To compare tool lives of the present tools A to E and comparative tool A after cutting for 30 km, the amount of wear of a flank was confirmed. The present tools A and D had a flank wear of 6 µm, the present tool B had a flank wear of 6.5 µm, and the present tool C had a flank wear of 7 µm, whereas comparative tool A (a monocrystalline diamond cutting tool) had a flank wear of 7.5 µm, indicating an increase of 7 to 25%. Accordingly, the present tools A to D had more excellent lives. The present tool E had a flank wear of 8 µm, which was greater than that of comparative tool A.
2) When the surface roughnesses of the present tools A to C were compared with the surface roughness of comparative tool A, both were 1.5 µm, and tool marks had the same sectional shape. The roughnesses of machined surfaces machined by the present tools A to C were equal to that machined by comparative tool A as a monocrystalline diamond cutting tool.
3) On the other hand, in the present tool D, fine cracks of about 200 to 500 nm occurred in its cutting blade, and irregularities of the cutting blade caused by the cracks were transferred in a tool mark on a machined surface. Therefore, the machined surface had a quality level worse than those obtained by using the present tool A and comparative tool A.
4) Further, in the case of using the present tool E, slight chatter marks were observed in a tool mark.

### (Test Example 2)

Another cutting test was performed under the following conditions:

### (1) Tools

### (Common specifications)

corner radius 0.8 mm, relief angle 7°, rake angle 0°

### (Specifications for individual tools)

the present tool F: cutting blade roundness a radius of 500 nm
comparative tool B: cutting blade roundness a radius of 500 nm

### (2) Workpiece

aluminum alloy AC4B, φ150 mm×190 mm with four grooves spaced apart

### (3) Machining Method

cylinder periphery turning wet cutting (2% aqueous emulsion)

### (4) Cutting Conditions

number of revolutions of a main spindle: 1,700 rpm (constant number of revolutions)
feed speed: 0.04 mm/rev
depth: φ0.1 mm/diameter
cutting distance: 10 km

As a result of performing a cutting test under the conditions described above, the following were found:
1) To compare tool lives of the present tool F and comparative tool B after cutting for 10 km, the amount of wear of a flank was confirmed. The present tool F had a flank wear of 1.0 µm, whereas comparative tool B (a sintered diamond cutting tool) had a flank wear of 3.5 µm, indicating an increase of 3.5 times. Accordingly, the present tool F had a more excellent life.
2) Further, when the cutting resistance (radial force/thrust force) of the present tool F was compared with that of comparative tool B, the present tool F had a cutting resistance of 0.8 N, whereas comparative tool B had a double cutting resistance of 1.6 N. Accordingly, it was confirmed that the present tool had cutting quality better than that of a conventional sintered diamond cutting tool.

### (Test Example 3)

The polycrystalline diamond obtained in Example 1 was used to fabricate the present tool G as a forming cutting tool with a concavely rounded cutting blade having the following specifications. For comparison, cutting tool B using monocrystalline diamond was also fabricated. The tools were fabricated as described below. Firstly, roughly formed diamond was brazed on a base metal. Thereafter, a flank was pressed against the outer periphery of a copper disk machined to have a convexly rounded shape with diamond fine particles applied thereto, and polishing was performed by causing the flank and the outer periphery to rub against each other. Consequently, a concavely rounded shape was transferred onto the flank of the diamond. On this occasion, the flank of the present tool G was uniformly polished over an entire surface, whereas the flank of comparative tool B had a portion having a rough and nonuniform polished surface resulting from crystal anisotropy at a position in an arc of about 5° to 10° from the center of roundness to both sides.

### (1) Tool Specifications

relief angle: 7°
rake angle: 0°
shape of the cutting blade: concavely rounded with a radius of 2 mm, arc area 30°
cutting tool's blade height: 10 mm, total length 100 mm, width 10 mm

The above results show that, since the tool of the present invention does not have crystal anisotropy as seen in a conventional monocrystalline diamond cutting tool, uniform machining is readily provided, and there is no need to set crystal orientation using an X ray and perform highly precise positioning brazing for determining a direction at the time of fabrication. Therefore, processes and time required for fabricating the tool can be significantly reduced.

### (Test Example 4)

The present tool G obtained in test example 3 was used, and for comparison, comparative tool A using monocrystalline diamond was fabricated. Carbon was machined using these tools.

### (1) Tools

### (Tool specifications)

corner radius 0.8 mm, relief angle 7°, rake angle 0°
cutting blade roundness a radius of 500 nm

### (2) Workpiece

carbon φ50 mmx30 mm with 12 grooves spaced apart

### (3) Machining Method

cylinder periphery turning dry cutting

### (4) Cutting Conditions

number of revolutions of a main spindle: 2,000 rpm (constant number of revolutions)
feed speed: 0.1 mm/rev
depth: φ0.2 mm/diameter
number of machined units: 20 units

As a result of performing a cutting test under the conditions described above, a large crack of 20 µm, which seemed to be crystal cleavage, occurred in the monocrystalline diamond cutting tool as comparative tool A, whereas only a crack of about 1 µm occurred and a surface roughness of less than or equal to 3.2 S, which was a prescribed value, was obtained in the present tool G.

As is obvious from the test results described above, when compared with a tool using a conventional material, the cutting tool of the present invention is excellent in wear resistance, defect resistance, cutting quality (cutting resistance), and the surface roughness of a workpiece after cutting, and can be readily fabricated.

## Claims

1. A cutting tool having a cutting blade formed of polycrystalline diamond made substantially only of diamond and produced by directly converting a non-diamond type carbon material as a starting material into diamond and sintering the diamond at an ultra high pressure and an ultra high temperature without adding a sintering aid or a catalyst, said polycrystalline diamond having a mixed construction including fine-grained diamond with a maximum grain size of less than or equal to 100 nm and an average grain size of less than or equal to 50 nm and plate-like or particulate coarse-grained diamond with a minimum grain size of greater than or equal to 50 nm and a maximum grain size of less than or equal to 10000 nm, and wherein roundness is provided at a boundary portion between a rake face and a flank forming said cutting blade, wherein said roundness has a radius of 100 to 2000 nm.

2. The cutting tool according to claim 1, wherein said fine-grained diamond has a maximum grain size of less than or equal to 50 nm and an average grain size of less than or equal to 30 nm.

3. The cutting tool according to claim 1 or 2, wherein said coarse-grained diamond has a minimum grain size of greater than or equal to 50 nm and a maximum grain size of less than or equal to 1000 nm.

4. The cutting tool according to one of claims 1 to 3, wherein said cutting blade is a forming cutting blade.

## Patentansprüche

1. Schneidwerkzeug mit einem Schneidblatt, das aus polykristallinem Diamant gebildet ist, der im wesentlichen nur aus Diamant gebildet ist und der hergestellt wird, indem ein nicht-diamantartiges Kohlenstoffmaterial als Ausgangsmaterial direkt in Diamant umgewandelt wird und der Diamant bei einem ultra-hohen Druck und einer ultra-hohen Temperatur ohne Beifügung eines Sinterhilfsmittels oder eines Katalysators gesintert wird, wobei der polykristalline Diamant einen gemischten Aufbau hat, der feinkörnigen Diamant mit einer maximalen Korngröße von weniger als oder gleich 100 nm und einer durchschnittlichen Korngröße von weniger als oder gleich 50 nm aufweist sowie plättchenartigen oder partikelförmigen grobkörnigen Diamant mit einer minimalen Korngröße von größer als oder gleich 50 nm und einer maximalen Korngröße von weniger als oder gleich 10.000 nm, und wobei eine Rundheit an einem Grenzbereich zwischen einer Spanfläche und einer Flanke, die das Schneidblatt bilden, vorgesehen ist, wobei die Rundheit einen Radius von 100 bis 2.000 nm hat.

2. Schneidwerkzeug nach Anspruch 1, wobei der feinkörnige Diamant eine maximale Korngröße von weniger als oder gleich 50 nm und eine durchschnittliche Korngröße von weniger als oder gleich 30 nm aufweist.

3. Schneidwerkzeug nach Anspruch 1 oder 2, wobei der grobkörnige Diamant eine minimale Korngröße von größer als oder gleich 50 nm und eine maximale Korngröße von weniger als oder gleich 1.000 nm aufweist.

4. Schneidwerkzeug nach einem der Ansprüche 1 bis 3, wobei das Schneidblatt ein formendes Schneidblatt ist.

## Revendications

1. Outil de coupe ayant une lame de coupe formée à partir de diamant polycristallin sensiblement réalisé uniquement à partir de diamant et produit en convertissant directement un carbone de type non diamantifère en tant que matériau de départ, en diamant et en frittant le diamant à une pression ultra-élevée et une température ultra-élevée sans ajouter d'aide au frittage ni de catalyseur, ledit diamant polycristallin ayant une construction mélangée comprenant un diamant à grains fins avec une taille de grain maximum inférieure ou égale à 100 nm et une taille de grain moyenne inférieure ou égale à 50 nm et un diamant particulaire à grains grossiers ayant une taille de grain minimum supérieure ou égale à 50 nm et une taille de grain moyenne inférieure ou égale à 10 000 nm, et dans lequel l'ovalisation est prévue au niveau d'une partie de limite entre une surface de raclette et un flanc formant ladite lame de coupe, dans lequel ladite ovalisation a un rayon de 100 à 2 000 nm.

2. Outil de coupe selon la revendication 1, dans lequel ledit diamant à grains fins a une taille de grain maximum inférieure ou égale à 50 nm et une taille de grain moyenne inférieure ou égale à 30 nm.

3. Outil de coupe selon la revendication 1 ou 2, dans lequel ledit diamant à grains grossiers a une taille de grain minimum supérieure ou égale à 50 nm et une taille de grain maximum inférieure ou égale à 1 000 nm.

4. Outil de coupe selon l'une des revendications 1 à 3, dans lequel ladite lame de coupe est une lame de coupe de formage.
